# EUROPEAN PATENT APPLICATION

(11) **EP 4 674 255 A1**
(43) Date of publication of application: **07.01.2026**
(21) Application number: 25186424.5
(22) Date of filing: 30.06.2025
(51) Int. Cl.: A01G 20/47, F04D 25/08

(54) **BLOWER**

(30) Priority: 01.07.2024 US 202418760622
(71) Applicant: Techtronic Cordless GP, Anderson, SC 29621 (US)
(72) Inventor: VANASSE, Josh, Anderson, 29621 (US); KOWALCZYK, Charles, Anderson, 29621 (US); REED, Scott W., Anderson, 29621 (US); HOFFMAN, Ronald J., Anderson, 29621 (US)
(74) Representative: Zimmermann & Partner Patentanwälte mbB

(57) **Abstract**

A blower including: a passageway for directing airflow from an air inlet to a front end of the blower, the passageway having a variable length; a motor disposed in the passageway and operably coupled to a fan, a handle disposed below the passageway, wherein the handle comprises a trigger that receives a user input and a sensor that detects a position of the trigger; and a control circuitry in communication with the motor and the sensor, wherein the control circuitry controls a speed of the motor based on information from the sensor, wherein the length of the passageway between the air inlet and air outlet is greater than or equal to 12 inches.

## Description

### FIELD

The present disclosure relates generally to handheld outdoor power tools, and more particularly to handheld blowers.

### BACKGROUND

Blowers are used to generate airflow to perform work operations, such as yard maintenance. Blowers typically include an elongated structure through which airflow is generated. The direction of airflow is controlled by moving the blower to point the elongated structure in a desired direction. To generate high airflow rates, blowers typically incorporate large motors with heavy components. As a result, supporting structures of the blower are typically heavy, resulting in an operator having to exert significant effort to hold and maneuver the blower.

Accordingly, improved blowers are desired in the art. In particular, blowers which provide high operating capabilities (e.g., high airflow rates and airflow forces) while maintaining lightweight construction for maneuverability would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a blower is provided. The blower includes a passageway for directing airflow from an air inlet to a front end of the blower, the passageway having a variable length; a motor disposed in the passageway and operably coupled to a fan, a handle disposed below the passageway, wherein the handle comprises a trigger that receives a user input and a sensor that detects a position of the trigger; and a control circuitry in communication with the motor and the sensor, wherein the control circuitry controls a speed of the motor based on information from the sensor, wherein the length of the passageway between the air inlet and air outlet is greater than or equal to 12 inches.

In accordance with another embodiment, a blower is provided. The blower includes a tube for directing airflow from an air inlet to a nozzle; a motor disposed in the tube and operably coupled to a fan, the fan rotatable about a longitudinal axis parallel to a direction of airflow through the tube; a handle coupled to the tube, wherein the handle comprises a trigger that receives a user input and a sensor that detects a position of the trigger; a control circuitry in communication with the motor and the sensor, wherein the control circuitry controls a speed of the motor based on information from the sensor; and a housing surrounding at least a portion of the tube and the control circuitry, wherein the housing defines a protruding portion, wherein the control circuitry is disposed in the protruding portion, wherein the control circuitry is disposed on a top side of the tube, wherein the handle is disposed on a bottom side of the tube, and wherein the handle and control circuitry are rotationally offset from one another about a central axis of the tube.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a left side view of a blower in accordance with embodiments of the present disclosure;
FIG. 2 is cross-sectional view of the blower in accordance with embodiments of the present disclosure;
FIG. 3 is a rear view of the blower in accordance with embodiments of the present disclosure;
FIG. 4 is a front view of the blower in accordance with embodiments of the present disclosure;
FIG. 5 is a front perspective view of a base component of the blower in accordance with embodiments of the present disclosure, the base component not including an extension tube or a battery;
FIG. 6 is a perspective view of an extension tube including a nozzle in accordance with embodiments of the present disclosure, the extension tube attachable to the base component of the blower for directing airflow to a desired location;
FIG. 7 is a partial cross-sectional view of the blower in accordance with embodiments of the present disclosure;
FIG. 8 is a side view of a base component of the blower in accordance with embodiments of the present disclosure;
FIG. 9 is a partially exploded side view of the base component of FIG. 8 and a plurality of extension tubes and a nozzle for engagement with the base component in accordance with embodiments of the present disclosure;
FIG. 10 is an assembled side view of the base component, extension tubes, and nozzle of FIG. 9 in accordance with embodiments of the present disclosure;

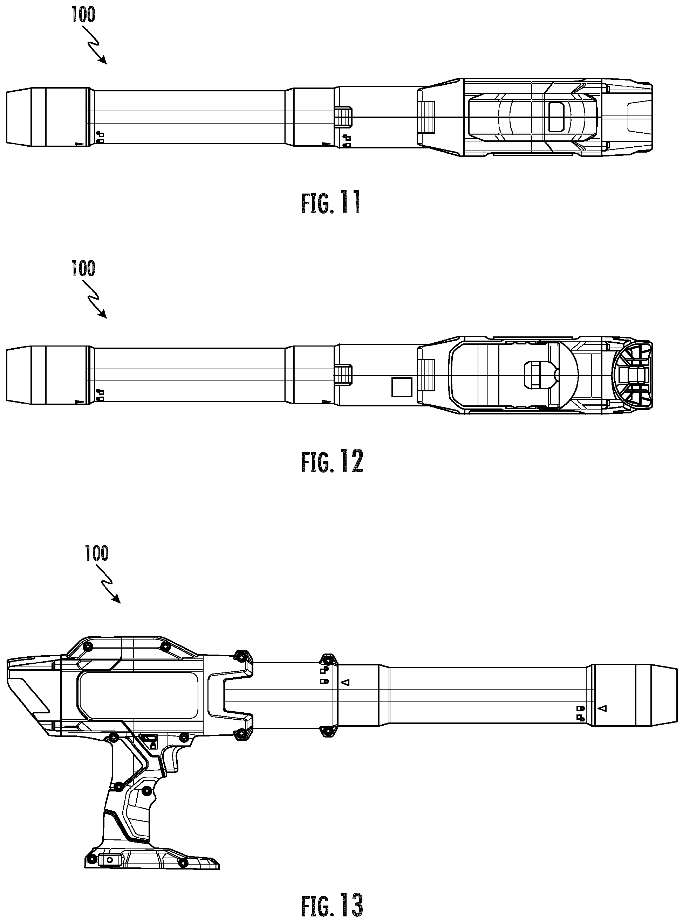

FIG. 11 is a top view of the blower in accordance with embodiments of the present disclosure;
FIG. 12 is a bottom view of the blower in accordance with embodiments of the present disclosure;
FIG. 13 is a right side view of the blower in accordance with embodiments of the present disclosure; and

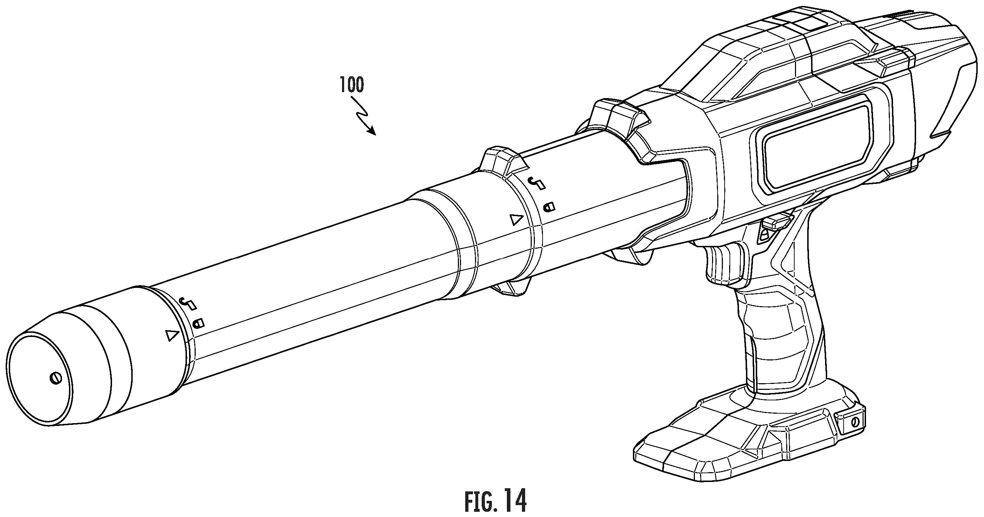

FIG. 14 is a perspective view of the blower in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, blowers described herein exhibit high performance characteristics using low weight construction that affords easy maneuverability. The blower includes a motor that rotationally drives an axial fan to bias airflow through a passageway of the blower. The passageway can be defined by a tube. The tube is coupled to and/or defined by a housing that can further define a handle through which a user can grasp and maneuver the blower during use. The handle may be located below the tube in the normal operating orientation of the blower and extend in a direction generally perpendicular to a length of the passageway. The blower is configured to route forces generated by operation of the motor and/or the fan through the housing in a manner whereby a reinforcement requirement of the blower (i.e., ribbing, framing, bracing, etc.) is reduced, thereby reducing mass of the blower without compromising strength. In this regard, high-powered components can be used to drive airflow through the blower while permitting ease of maneuverability and allowing the user to hold the blower for extended periods of time.

The motor can receive power from a removable (detachable) power source, such as a battery. Control circuitry can regulate power supplied to the motor from the battery. The control circuitry can be positioned adjacent to the tube and angularly offset from the handle by approximately 180 degrees. That is, the control circuitry and handle can be positioned on approximately opposite sides of the tube. The control circuitry can be disposed in a protruding portion of the housing and held in place against the tube by compressive force exhibited between the housing and the tube (or a secondary member). For instance, the tube can include a sidewall defining an opening in which the control circuitry is at least partially positioned or disposed adjacent to. A ledge can extend into the opening and support the control circuitry such that airflow driven through the tube directly contacts at least a portion, such as a majority, of a surface of the control circuitry. In some instances, the control circuitry includes a heat sink that sits within the opening and which conveys heat generated by electrical components of the control circuitry into the airflow driven through the tube. The heatsink can be in direct fluid communication with the airflow to maximize heat transfer and maintain the control circuitry below a critical overheat temperature during prolonged use of the blower.

The motor and fan can be held in place within the tube by a stator. The stator can define one or more fins disposed downstream of the fan that remove swirl generated by rotation of the fan such that the airflow dispensed by the blower is more linear. The stator can also define a body which interfaces with complementary structure of the tube to couple the motor and fan to the tube. For instance, the tube can include structure having one or more projections including vibrational dampening material. The stator can include complementary structure that interfaces with the structure of the tube to retain the stator in a relatively fixed position with respect to the tube. The vibrational dampening material can mitigate transfer of vibration from the motor and fan to the control circuitry and the user. In this regard, the motor can be driven faster without causing component failure and without creating user fatigue.

The blower can include a base component which can be used in isolation (i.e., by itself) to generate airflow. In an embodiment, the blower can be configured to have an adjustable length (i.e., a length of the passageway may be adjustable). The base component can include structure that allows for attachment of one or more accessory components. The accessory components can include extension tubes and nozzles. In some applications, a single extension tube is coupled to the base component to form an elongated passageway for airflow to travel through the blower. In other applications, a plurality of extension tubes is coupled to the base component to further elongated the passageway. The nozzle can be attached to a frontmost accessory and/or directly to the base component to form a desirable airflow characteristic. Use of an adjustable length passageway allows a user to adjust the blower to accommodate a wide range of operational activities. For example, the blower can be used in a shortened state to provide airflow on a workbench or car hood. The blower can be reconfigured to a longer state to provide airflow to areas that are more difficult to reach or that are further away from the user. The accessories can be swapped, interchanged, and/or adjusted to provide a desired angular buoyancy (i.e., to set the angular orientation of the blower, and thus the passageway, with reduced force provided on the blower by the user).

In an embodiment, sound dampening material can be disposed within the tube to reduce noise emission generated by the motor and the fan. The sound dampening material can extend from a rear end of the blower, such as from a position adjacent to an inner edge of a rear air inlet, towards the stator. In some instances, the sound dampening material can extend up to the stator and include a cutout which allows the mating structure of the tube and stator to interface with one another.

Blowers described herein may exhibit increased performance characteristics as compared to traditional blowers, particularly in view of blower weight. For example, the blower can define a base weight (as measured by a weight of a base component without the battery) less than 1000 grams (g) while producing a maximum airflow force (i.e., a force generated with the motor operating in a maximum capacity) of at least 5.7 newtons (N) through a nozzle having an area in a range of 0.002 square meters (m²) and 0.003 m². The blower can further define an airflow rate of at least 5.88 cubic meters per minute (m³/min) (i.e., 210 cubic feet per minute) and generate a flow rate to weight efficiency, as measured by the airflow rate divided by the base weight of the blower, of at least 5.88 m³/(kg*min). Unlike traditional blowers, blowers described herein exhibit quiet operational performance, high power output, and are lightweight and easily maneuverable.

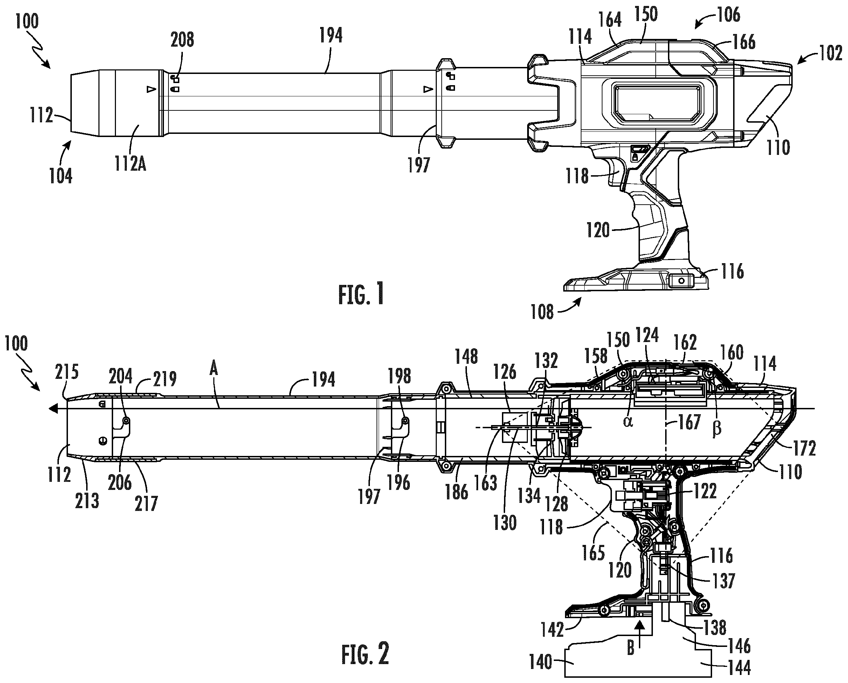

Referring now to the drawings, FIG. 1 illustrates a side view of a blower 100 in accordance with an embodiment. The blower 100 is a handheld power tool for use by a user to perform a work operation, such as yard maintenance. The blower 100 generally includes a rear end 102, a front end 104, a top end 106, and a bottom end 108. The rear end 102 may be defined by an air inlet 110. The front end 104 may be defined by a nozzle 112. The top end 106 may be defined by a portion of a housing 114. The bottom end 108 may be defined by a handle 116 which is graspable by a user to hold the blower 100 and direct airflow from the nozzle 112 in a desired direction. Other configurations are possible without deviating from the scope of the present disclosure.

Referring to FIG. 2, airflow A passes through the blower 100 from the air inlet 110 to the nozzle 112 and is discharged from the blower 100 through the nozzle 112 at a relatively high speed, such as at least 20 miles per hour (MPH), at least 25 MPH, at least 30 MPH, at least 35 MPH, or faster. The user can initiate airflow A through the blower 100 by actuating a trigger 118. The trigger 118 can be positioned on or near the handle 116 such that the user interacts with the trigger 118 using their index (pointer) finger. The trigger 118 may be infinitely adjustable between two end points of travel. The end points of travel can be defined by stops or other travel delimiting components. The user can infinitely vary the speed of airflow A between a minimum speed and a maximum speed by adjusting a relative position of the trigger 118 between the two end points of travel.

The trigger 118 can project from a housing 120 of the handle 116 to permit user interaction. In an embodiment, the housings 114, 120 can be integral with one another, e.g., unitary. The trigger 118 can interface with a sensor 122 disposed at least partially in the housing 120. The sensor 122 can detect a relative position of the trigger 118, e.g., between the two end points of travel. The sensor 122 can be in communication with control circuitry 124, such as a printed circuit board (PCB), that affects control of the airflow A in response to the detected position of the trigger 118.

The control circuitry 124 can communicate with a motor 126 that drives a fan 128 to rotate. The fan 128 can rotate about an axis 130 that is parallel with the direction of airflow A. The fan 128 can include one or more blades arranged to drive airflow A through the blower 100. In an embodiment, the fan 128 is disposed upstream of the motor 126. A drive shaft 132 extends from the motor 126 in a rearward direction to the fan 128. The drive shaft 132 is coupled to the fan 128 to drive the fan in response to actuation of the trigger 118. The drive shaft 132 can extend through a stator 134 that supports one or more components of the motor 126. The stator 134 can define stator vanes that prevent swirl in the airflow A during operation of the fan 128. The stator 134 can reduce swirl that would otherwise occur at the nozzle 112.

The control circuitry 124 can also communicate with a power system of the blower 100. The power system can include one or more electrical contacts 137 configured to electrically interface with complementary electrical contacts 138 on a power storage device, such as a removable battery 140. The battery 140 can be insertable into the handle 116 in a direction B, such as from a bottom end 142 of the handle 116. Direction B may intersect (e.g., orthogonally with) the axis 130 on the side of the fan closest to air inlet 172. Positioning the battery below and behind the motor lowers the center of gravity of the blower and helps balance the weight of the blower to the location of the user handle (i.e., about housing 120). The battery 140 may include a base 144 and an elongated member 146 that fits within the bottom end 142 of the handle 116. In some instances, the blower 100 may be configured to rest on the base 144 of the battery 140 when the blower 100 is not actively in use. The complementary electrical contacts 138 are at least partially arranged on the elongated member 146 of the battery 140. The battery 140 can include mating structure that interfaces with complementary mating structure of the handle 116 to secure the battery 140 to the handle 116 and to prevent unwanted detachment of the battery 140 during operation of the blower 100.

The power system of the blower 100 can further include one or more electrical components in communication between the electrical contact(s) 137 and the motor 126 (and or one or more other electronic components of the blower 100) to selectively provide power from the battery 140 to the motor 126 to drive the fan 128 in response to actuation of the trigger 118. By way of example, the electrical components can include one or more switches that selectively open and close a power circuit between the battery 140 and the motor 126 based on the relative position of the trigger 118, one or more circuits, capacitance components, resistive components, or the like.

The battery 140 and control circuitry 124 may be disposed on opposite sides of a tube 148 through which the airflow A passes. The battery 140 can be disposed below the tube 148 during normal operation of the blower 100 and the control circuitry 124 can be disposed above the tube 148 during normal operation of the blower 100. In an embodiment, the control circuitry 124 and battery 140 are rotationally offset from one another by approximately 180 degrees about the tube 148. Rotational offset of approximately 180 degrees between the control circuitry 125 and the battery 140 allows for easier maneuverability of the blower 100 and increases ease of handling. Neither the battery 140 nor the control circuitry 124 extends into the tube 148. In this regard, neither the battery 140 nor the control circuitry 124 restricts or impedes airflow A. The tube 148 can define a linear conduit for airflow A to travel within. The linear conduit may be free, or essentially free, of bends, turns, kinks, throttling portions, or other internal features which reduce or restrict airflow A through the tube 148. It should be understood that the motor 126 and fan 128 may be the only components disposed in the linear conduit of the tube 148.

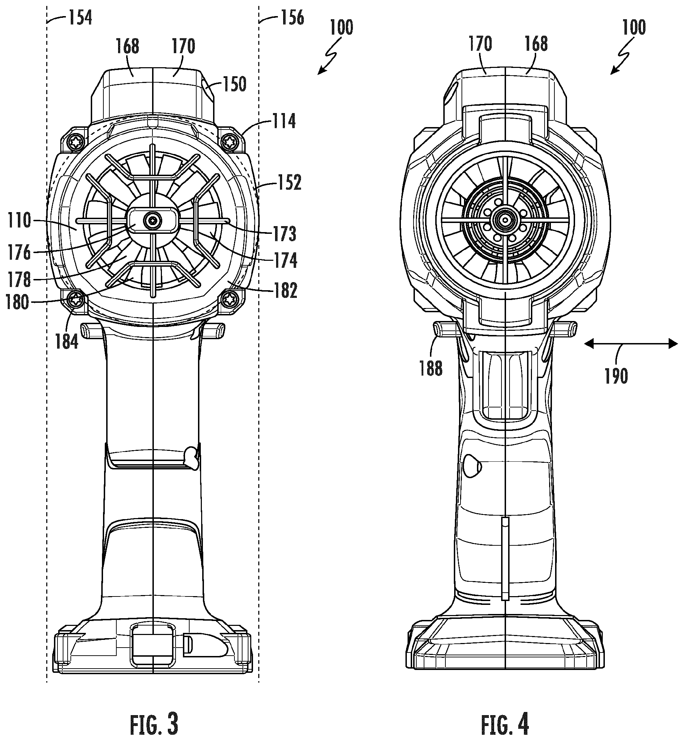

The control circuitry 124 can be disposed within a protruding portion 150 of the blower 100. The protruding portion 150 can be defined by the housing 114. Referring to FIG. 3, the housing 114 can define a best fit perimeter, such as a best fit circle 152, as seen in a direction of the airflow A. The protruding portion 150 can extend radially outside of the best fit perimeter (e.g., the best fit circle 152). The protruding portion 150 can remain between lateral outer boundaries 154, 156 of the best fit circle 152, where the lateral boundaries are defined with the blower 100 supported by the base 144 of the battery 140 on a horizontal surface.

Referring to FIG. 2, the protruding portion 150 can define a swept surface when viewed from a side view of the blower 100. The swept surface can include a sloped leading end 158 and a sloped trailing end 160. Each of the sloped leading and trailing ends 158, 160 can lie along a plane or best fit plane. A landing 162 can extend between and connect the sloped leading end 158 and the sloped trailing end 160. The landing 162 can lie along a plane, or best fit plane, that is generally parallel with (such as parallel with) the direction of the airflow A.

In an embodiment, the sloped leading end 158 of the protruding portion 150 can terminate at a position behind a rearmost portion of the fan 128. In this regard, for example, the entire protruding portion 150 can be disposed between the fan 128 and the rear end 102 of the blower 100. In an embodiment, a best fit plane along which the sloped leading end 158 is disposed can intersect the motor 126. Such an arrangement can optimize strength and rigidity of the blower 100 in view of the spatial arrangement of the components of the blower 100. For example, force from the motor 126 and fan 128 can be transferred through the sloped leading end 158 based on the orientation and profile of the sloped leading end 158 with respect to the position of the motor 126 and/or fan 128.

The planes, or best fit planes, of the sloped leading and trailing ends 158, 160 are angularly offset from the landing 162. In an embodiment, the plane, or best fit plane, of the sloped leading end 158 can be angularly offset from the landing 162 by an angle α and the plane, or best fit plane, of the sloped trailing end 160 can be angularly offset from the landing 162 by an angle β, where α and β are different from one another. In an embodiment, α is greater than β. For instance, α can be greater than 145 degrees and β can be less than 145 degrees. The resulting protruding portion 150 routes forces through the blower 100 (and more particularly routes forces through the housing 114 and other supporting structure(s) of the blower 100) in a manner that reduces stress from operation of the fan 128 and/or impact in the event of a drop. The housing 114 can thus be made lighter while allowing the motor 126 to operate at high speeds which generates stress within the blower 100.

In some instances, the planes, or best fit planes, of the sloped leading and trailing ends 158, 160, the landing 162, the air inlet 110, and a plane 165 extending from an intersecting point 163 between the plane, or best fit plane, of the sloped leading end 158 and the axis 130 of the motor 126 and fan 128 and perpendicularly intersecting the plane of the air inlet 110 can form a polygonal shape. The polygonal shape can be an irregular convex-shaped polygon, such as a non-reflective pentagon, such as a non-reflective diamond (e.g., a pear-shaped diamond) where a front apex of the diamond is further spaced apart from a vertical centerline 167 than a rear apex of the diamond. As described above, the intersection of forces transmitted through the blower 100 are more effectively routed to portions of the housing 114 (and optionally one or more support structures of the blower 100, such as internal bracing) by use of the non-reflective pentagonal diamond shape to allow for higher operating speeds of the motor 126 without requiring heavy bracing or thicker housing sidewall construction.

Referring again to FIG. 1, the protruding portion 150 can be formed from two or more components of the housing 114. For example, the housing 114 can include a first portion 164 and a second portion 166. In some instances, yet other portions of the housing 114 can exist, such as a third portion, a fourth portion, etc. The first and second portions 164 and 166 can together form half of a clamshell housing. Referring to FIGS. 3 and 4, the clamshell housing can be defined by two generally similar halves of the housing 114, e.g., a first half 168 and a second half 170, which are joined together to form the housing 114. The first and second portions 164 and 166 can together form one of the first half 168 or the second half 170. In some instances, each of the first and second halves 168 and 170 can include one of the first portion 164 and one of the second portion 166. The first and second portions 164 and 166 can interface with one another to protect the control circuitry 124 (FIG. 2). In some instances, the first and second portions 164 and 166 can form a snap fit with one another. In other instances, the first and second portions 164 and 166 can be coupled together by a fastener or chemical bond, such as an adhesive or an epoxy. In yet other instances, the first and second portions 164 and 166 can be welded together, e.g., sonically welded together. In an embodiment, the second portion 166 can form a gripping portion of the handle 116 whereby the operator can grasp the handle 116 while the first portion 168 can extend around at least a portion of the trigger 118.

In an embodiment, the entire handle 116 is disposed in front of the sloped trailing end 160 of the protruding portion 150. In an embodiment, a rearmost portion of the handle 116 can be aligned with a frontmost portion of the sloped trailing end 160 in the direction of airflow A. That is, a plane perpendicular to the direction of airflow A can lie tangent to both the frontmost portion of the sloped trailing end 160 and the rearmost portion of the handle 116.

The air inlet 110 may be angled with respect to the direction of airflow A. In particular, the air inlet 110 is angled at a relative angle less than 90 degrees, as measured with respect to the direction of airflow A. In an embodiment, the air inlet 110 lies along a plane, or a best fit plane, that intersects the lower end 142 of the handle 116. In this regard, the air inlet 110 is oriented in a downward direction during use of the blower 100. Downward orientation of the air inlet 110 might allow debris from below the blower 100, such as debris on an underlying ground surface, to be sucked into the tube 148 during use of the fan 128 which might damage the motor 126 or clog the fan 128. To prevent ingress of debris into the tube 148, a guard 173 is coupled to the housing 114 near the air inlet 110. Referring to FIG. 3, the guard 173 can define openings 174 through which airflow A can pass. The guard 173 can include a wire structure having a symmetrical pattern. In an embodiment, the wire structure can be reflectively symmetrical about at least one line (such as a vertical line, a horizontal line, a diagonal line, etc. as seen when the blower 100 is in use). In another embodiment, the wire structure can be reflectively symmetrical about a plurality of lines, such as at least two lines, such as at least three lines, such as at least four lines, etc. In an embodiment, the wire structure can be rotationally symmetrical, such as about a center point of the guard 173. In yet another embodiment, the wire structure can be rotationally symmetrical and reflectively symmetrical about at least one line. The wire structure can define a central opening 176, a set of middle openings 178 disposed outside of the central opening 176, and a set of outer openings 180 disposed outside of the middle openings 178. The outer openings 180 can be disposed adjacent to a rib 182 that extends around the perimeter of the guard 173. The rib 182 can define mounting locations through which one or more fasteners 184 can be installed to attach the guard 173 to the housing 114. The fastener(s) 184 can be oriented in a direction parallel to the direction of airflow A, i.e., offset from an angle of the air inlet 110.

In an embodiment, the sloped trailing end 160 can lie along a plane or best fit plane that intersects the air inlet 110 at an approximately 90 degree angle. For instance, the sloped trailing end 160 can lie along a plane or best fit plane that intersects a plane or best fit plane of the air inlet 110 in a range of between 80 degrees and 100 degrees. Without being bound by any particular theory, and as described above, the spatial orientation and arrangement of each component of the blower 100 can be precisely positioned in view of the lightweight and powerful nature of the blower 100. By orienting force from the protruding portion 150 towards the air inlet 110 in a perpendicular, or generally perpendicular, manner, forces exhibited on the blower 100 (such as those encountered during normal use, in response to an impact, etc) can be transmitted through the blower 100 to permit high strength and low weight.

Noise reduction can be implemented through inclusion of one or more noise reducing features, such as a tube liner 186. The tube liner 186 can line the tube 148, or a portion of the tube 148, from the air inlet 110 in a forward direction. The tube liner 186 can absorb sound waves, such as those generated by movement of the fan 128, and reduce sound emanating from the blower 100 when the motor 126 is actively driving the fan 128. Since the blower 100 is held from an underside, i.e., at handle 116, rather than from above, the tube 148 is closer to the operator's ear than with traditional blowing equipment. The noise reducing features, and more particularly the tube liner 186, can mitigate the effects of proximity and result in operational noise less than or equivalent to traditional blowing equipment.

By way of non-limiting example, the tube liner 186 can include a mass-loaded vinyl sound barrier, acoustic mineral wool insulation, glue compound, one or more resilient sound channels, acoustic caulk, soundproof foam, soundproof blankets or sheets, or the like. In some instances, the tube liner 186 can be coupled to the tube 148 via adhesive. In other instances, the tube liner 186 can be coupled to the tube 148 via one or more fasteners, e.g., threaded fasteners.

Referring to FIG. 4, the blower 100 can include one or more lockout features, such as a lockout feature 188, that allow the user to lockout the trigger 118. The lockout feature 188 can be adjustable between two or more positions, such as adjustable between three positions. These positions can include a locked-out position in which the trigger 118 is not actuatable, and a ready position in which the trigger 118 is actuatable. In some instances, the ready position can include a plurality of different ready positions. For instance, the blower 100 may be configurable between two or more ready settings, each of which is selectable based on the position of the lockout feature 188. In the illustrated embodiment, the lockout feature 188 is slidable in a lateral direction 190. When the lockout feature 188 is in a left position one of the ready settings is selected. When the lockout feature 188 is in the right position another of the ready settings is selected. When the lockout feature 188 is in the central position, the lockout feature 188 is in the locked-out position. By sliding the lockout feature 188 in either direction shown by arrowed line 190, the user is able to select an operating condition for the blower 100. Yet other types of lockout features can be implemented. For example, in an embodiment the motor 126 (FIG. 2) may be adjustable between two or more speed settings (e.g., a slow speed and a fast speed). Motor speed may be throttled in one of the two or more speed settings. By switching the position of the lockout feature 188, the user can select between and lock at a desired speed setting.

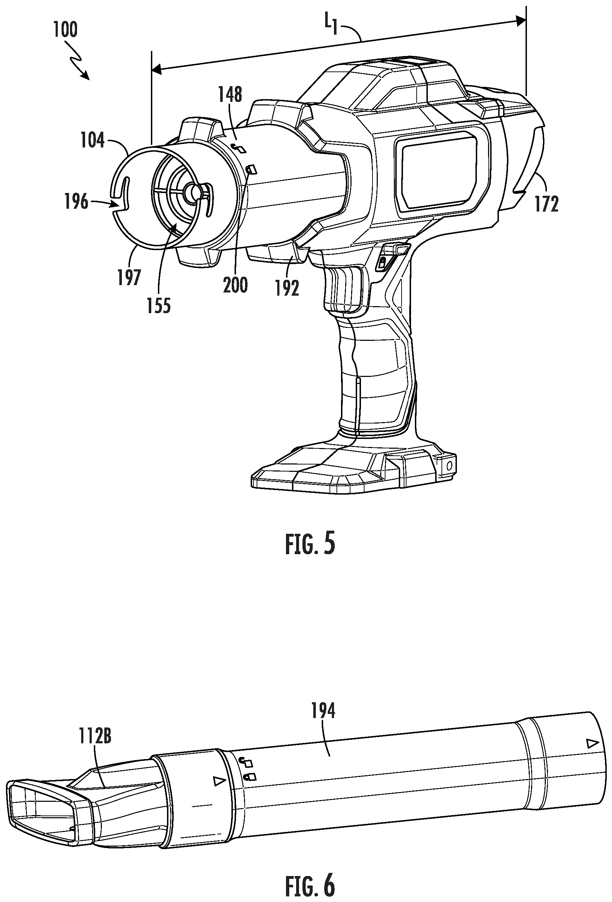

FIG. 5 illustrates a base component 192 of the blower 100, i.e., as seen without an extension tube 194 as depicted in FIGS. 1 and 2. As depicted in FIG. 2, the tube 148 includes engagement features 196 that interact with complementary engagement features 198 of the extension tube 194 to detachably secure the extension tube 194 to the base component 192 of the blower 100. In an embodiment, the engagement features 196 and complementary engagement features 198 can include a twist to lock, a bayonet type connector, or the like. The user can rotate the engagement features 196 and complementary engagement features 198 between locked and unlocked positions. Indicia 200 may include symbols or other indications that signal to the user when the engagement features 196 are secured with the complementary engagement features 198.

The extension tube 194 can define a linear profile extending towards the nozzle 112. The extension tube 194 can have a rigid construction such that the extension tube 194 is formed from a relatively rigid material, such as a plastic, a metal, an alloy, or a combination thereof. The rigid extension tube 194 does not flex or bend in a manner to allow for redirecting airflow A without turning the entire blower 100. That is, the rigid extension tube 194 is not a flexible hose or flexible conduit that can be modified to redirect airflow to a desired location. Redirecting airflow A instead requires turning of the blower 100 to face the desired location.

The blower 100 can be a variable length blower having a variable length as measured from the air inlet 172 to the front end 104. In an embodiment, the relative position of the air inlet 172 can remain relatively the same (fixed) as the length of the blower 100 changes. The front end 104 can be displaced through selection of components and accessories and their relative arrangement to achieve a desired length.

In some embodiments, such as the embodiment shown in FIG. 5, the base component 192 of the blower 100 may be used without the extension tube 194 and without the nozzle 112 (which are shown in FIGS. 1 and 2). In such embodiments, airflow A enters a passageway 155 from the air inlet 172 of the blower 100 and is biased towards, and exits from the base component 192 at, an air outlet 197 of the base component 192. The blower 100 can define a length L₁, as measured from the air inlet 172 to the air outlet 197, greater than or equal to 10 inches, greater than or equal to 12 inches, greater than or equal to 13 inches, greater than or equal to 14 inches, or greater than or equal to 15 inches. In an embodiment, the passageway 155 is linear (i.e., is devoid of bends or curves) between the air inlet 172 and the air outlet 197. The passageway 155 can have a rigid construction such that the passageway 155 is not readily deformable.

In an embodiment, the base component 192 of the blower 100 can be devoid of a cover including a grated surface at or immediately adjacent to the air outlet 197. In an embodiment, the air outlet 197 of the base component 192 is devoid of a cover including a grated surface within one inch of an outlet end (a terminal end) of the tube 148. In an embodiment, the air outlet 197 of the base component 192 is devoid of a cover including a grated surface within two inches of the outlet end of the tube 148.

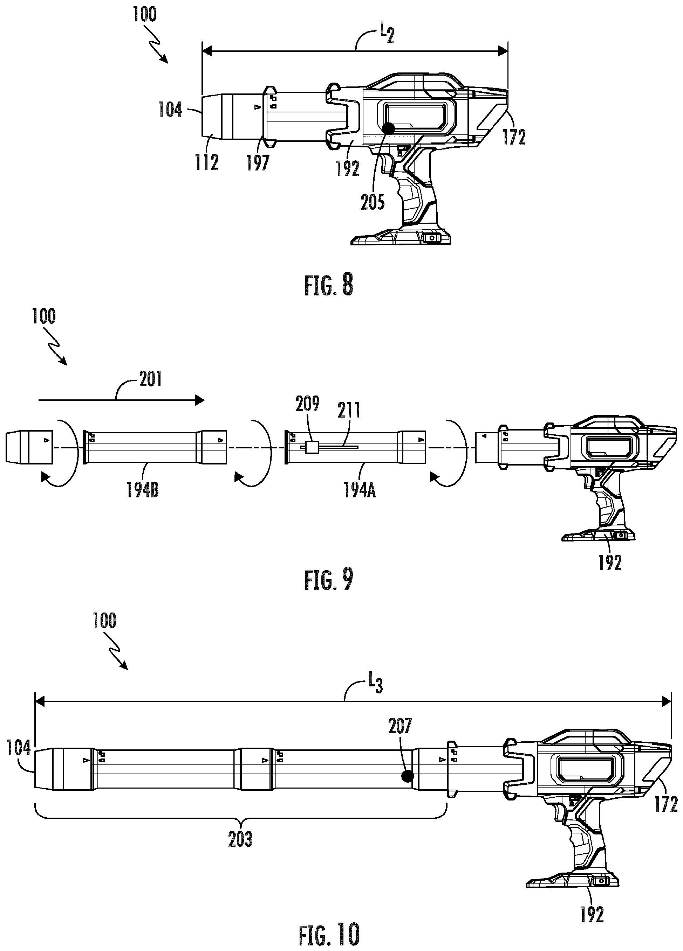

In an embodiment, the nozzle 112 can be directly coupled with the base component 192. For example, referring to FIG. 8, the nozzle 112 can be aligned at the air outlet 197 and coupled therewith, e.g., through engagement with the engagement feature 196 (FIG. 5). With the nozzle 112 directly coupled to the base component 192, the blower 100 can define a length L₂, as measured from the air inlet 172 to the front end 104 of the nozzle 112, greater than or equal to 12 inches, greater than or equal to 13 inches, greater than or equal to 14 inches, greater than or equal to 15 inches, or greater than or equal to 16 inches.

In an embodiment, the nozzle 112 may include a tapered end having a narrowing portion 213 (FIG. 2) at an outlet end 215 that reduces an internal cylindrical diameter at the outlet end 215 from an internal cylindrical diameter measured upstream of the outlet end 215. The narrowing portion 213 may provide desirable flow, speed, direction, shape, and/or pressure of the airflow exiting the nozzle 112. In an embodiment, the narrowing portion 213 can be formed into an outlet end of at least one of the extension tubes 194. However, the extension tubes 194 may not have a narrowing portion at the outlet end such that the internal cylindrical diameter at the outlet end of the extension tube 194 is approximately the same as the internal cylindrical diameter at an inlet end opposite the outlet end (see FIG. 2). In an embodiment, the extension tube 194 can have a portion 217 at an outlet end 219 that widens in at least one radial direction (FIG. 2).

As described above, the relative length between the air inlet 172 and the front end 104 of the blower 100 can be increased beyond L₁ by including the extension tube 194 coupled to the air outlet 197 of the base component 192. In an embodiment, the blower 100 can be used with more than one extension tube 194 coupled to the air outlet 197 of the base component 192. For example, the blower 100 can be used with at least two extension tubes 194, or at least three extension tubes 194, or more. The plurality of extension tubes can be serially coupled together to extend an effective length of the blower 100. Longer lengths allow the user to reach further distances and more precisely direct airflow towards a target location.

FIG. 9 illustrates a base component 192 of the blower 100, a first extension tube 194A, a second extension tube 194B, and the nozzle 112 as seen prior to assembly. The base component 192, first and second extension tubes 194A, 194B, and nozzle 112 are brought together, e.g., in direction 201. In an embodiment, the first and second extension tubes 194A and 194B can be the same as one another (identical). In this regard, the first and second extension tubes 194A and 194B can be interchanged with one another.

In an embodiment, the first and second extension tubes 194A, 194B and nozzle 112 can be coupled to the base component 192 serially, i.e., one at a time. For example, the first extension tube 194A can be aligned and coupled to the air outlet 197 prior to aligning the second extension tube 194B with the first extension tube 194A, which can occur prior to aligning and coupling the nozzle 112 with the second extension tube 194B. In other instances, the first and second extension tubes 194A, 194B and/or nozzle 112 can be coupled together (with one another) to form an assembled extension tube 203 (FIG. 10) which can then be coupled with the base component 192.

FIG. 10 depicts the blower 100 as seen after the assembled extension tube 203 is coupled with the base component 192. With the assembled extension tube 203 coupled to the base component 192, the blower 100 can define a length L₃, as measured from the air inlet 172 to the front end 104 of the nozzle 112, of greater than or equal to 15 inches, greater than or equal to 16 inches, greater than or equal to 18 inches, greater than or equal to 20 inches, or greater than or equal to 24 inches, of greater than equal to 26 inches, of greater than or equal to 28 inches, or of greater than or equal to 30 inches, or more. The relative lengths L₁, L₂, and L₃ may generally have a relationship where L₃ > L₂ > L₁. In some instances, the blower 100 can be further configured to have a length, L₄, as measured from the air inlet 172 to the front end 104 of the nozzle 112, that is greater than L₃. For example, a third extension tube 194 can be coupled between the second extension tube 194B and the nozzle 112, a longer first and/or second extension tube 194A, 194B can be used, a different nozzle 112 can be used, or any combination thereof.

In an embodiment, the base component 192 can be used with a variable length extension tube 194. For example, the extension tube 194 can include a telescoping extension tube that adjusts between at least two different lengths. By way of example, the telescoping extension tube may include a plurality of segments that nest, or at least partially nest, within one another and which can be moved relative to one another between a maximum relative nested position defining a minimum length and a maximum relative extended position defining a maximum length. To change the length of the variable length extension tube, the user can move the plurality of segments relative to one another. For instance, to extend the length of the variable length extension tube, the user can move the plurality of segments apart from their nested configuration. Conversely, to reduce the length of the variable length extension tube, the user can move the plurality of segments together to nest. In some embodiments, the variable length extension tube can be infinitely adjustable between the maximum length and the minimum length. That is, the relative length of the variable length extension tube can be adjusted to and locked at a length anywhere between the minimum and maximum lengths. In other embodiments, the variable length extension tube can define a plurality of discrete length positions. For instance, the variable length extension tube can be adjusted between at least three discrete positions, at least four discrete positions, at least five discrete positions, or more. The user can select between the discrete positions to achieve a desired length of the variable length extension tube. By way of example, the discrete positions may be associated with a number of segments forming the variable length extension tube. Each pair of adjacent segments can be individually moved from a maximum relative nested position and a maximum relative extended position. Thus, the number of available length configurations may correspond to (e.g., equal) the number of segments forming the variable length extension tube. For example, variable length extension tubes with three nesting segments can be adjusted between three different lengths, variable length extension tubes with four nesting segments can be adjusted between four different lengths, variable length extension tubes with five nesting segments can be adjusted between five different lengths, and so on. In an embodiment, the variable length extension tube can have an adjustment range (i.e., a difference between the minimum and maximum relative positions) of at least 5 inches, such as at least 10 inches, such as at least 15 inches, such as at least 20 inches, such as at least 25 inches, such as at least 30 inches, or more.

Variable length blowers 100 (e.g., blowers with a telescoping tube and/or removable extension tube(s)) permit the blower to be more easily used on both high surfaces (e.g., a work table, a hood of a car, etc.) when not extended/attached and ground surfaces when extended/attached. In this regard, the user can quickly and efficiently transition between different operations using a single tool. Having a handle below the blower tube is generally disadvantageous to blower applications for a ground surface because they position the tube further from the ground when held by a user. However, having a handle below the blower tube provides added control for above-ground (elevated) surfaces. Having a variable length blower tube (e.g., with a telescoping tube and/or removable extension tubes) for a blower with a below-tube handle permits the blower to be useful in both applications. In addition, by having the air inlet angled toward the handle, a user has more clearance to pivot the blower up without interfering with the user's wrist or arm. For example, the air inlet might be made an acute angle relative to the longitudinal axis of the blower tube of between 20 and 80 degrees, of between 30 and 80 degrees, of between 20 and 70 degrees, of between 30 and 70 degrees, of between 40 and 70 degrees, of between 30 and 60 degrees, and of between 40 and 60 degrees. As mentioned above, a downward angled air inlet might create the risk of ingesting debris on the ground or another lower surface into the blower. This risk is mitigated not only through a guard, such as guard 173, but also because the position of the handle below the tube positions the users wrist or arm between the air inlet and such a surface.

The center of gravity (CoG) of the blower 100 changes as the effective length between the air inlet 172 and the front end 104 of the blower 100 changes. As the length of the extension tube(s) 194 increases, the CoG moves relatively forward, i.e., towards the front end 104 of the blower 100. For example, referring to FIG. 8, the base component 192 has a first CoG as depicted at location 205. The first CoG is disposed between the air inlet 172 and the air outlet 197. Referring to FIG. 10, the blower 100 has a second CoG as depicted at location 207 when a plurality of extension tubes 194 (such as first and second extension tubes 194A and 194B) are coupled to the base component 192. In this regard, the blower 100 may be more easily directed in a horizontal or slightly downward sloping direction when used without extension tubes 194. However, the blower 100 is more easily directed in a downward sloping direction when used with extension tubes 194. In this regard, the blower 100 is more easily oriented in a direction associated with a work operation being performed. When the extension tube(s) 194 are attached, the user is more likely to be directing the airflow towards a ground surface. Thus, a further forward CoG 207 is desirable. Conversely, when the blower 100 is used without extension tubes 194, the user is more likely to be directing the airflow towards an elevated surface. Thus, a further rearward CoG 205 is desirable.

In some embodiments, one or more selectable attachments that can be coupled to the base component 192 (e.g., the extension tube(s) 194) can have different relative weights or weight distributions as compared to one another. For example, the first extension tube 194A can be heavier than the second extension tube 194B. Alternatively, or in addition, the first extension tube 194A may be front-weighted to be heavier at a front end and the second extension tube 194B may be center-weighted or back-weighted to be heavier at the center or back end of the extension tube. The user can select between the first or second extension tubes 194A and 194B to achieve a desired angular buoyancy (i.e., a natural angular orientation of the blower 100 achieved with minimal user force). When using both the first and second extension tubes 194A and 194B together (where each has a different weight or different weight distribution/profile), the user can select the relative position of each of the first and second extension tubes 194A and 194B to affect the angular buoyancy of the blower 100. Thus, the user can assemble the blower 100 to achieve a desired operating angle based on the operation being performed. In an embodiment, the extension tube 194 can have an adjustable weighting, e.g., including a weighted element 209 having a variable position along the extension tube 194 (FIG. 9). For instance, the weighted element 209 can be movable along a rail 211 or other guide structure. The CoG of the blower 100 moves based on the relative position of the weighted element 209.

In an embodiment, the extension tube 194 can be selected from a plurality of extension tubes each having a different shape and/or a different size depending on the particular need of the operation. In an embodiment, the nozzle 112 can be selectable between a plurality of different shapes and/or sizes. For example, the nozzle 112 depicted in FIG. 1 is a generally circular nozzle 112A. The circular nozzle 112A causes airflow A to pass from the extension tube 194 in a generally circular pattern, dispersing in a conical shape as the airflow A passes from the nozzle 112. This circular pattern is particularly well suited for applications where a user wants to direct large flowrates of airflow in a general direction. Where more directed airflow is desired, the user may swap the generally circular nozzle 112A for a different shaped nozzle 112, such as a flattened nozzle 112B (FIG. 6). The flattened nozzle 112Bcauses airflow to disperse from the nozzle 112B in a more rectangular pattern. This may be particularly suitable for certain operations like lifting leaves from a yard where the airflow is desired to penetrate below the leaves to generate lifting force thereupon.

In some instances, the same extension tube 194 is compatible with different nozzles 112 (such as nozzles 112A and 112B). For example, referring again to FIG. 2, the extension tube 194 can include an engagement feature 204 and the nozzle 112 can include a complementary engagement feature 206. In an embodiment, the engagement features 204 and complementary engagement features 206 can include a twist to lock, a bayonet type connector, or the like. The user can rotate the engagement features 204 and complementary engagement features 206 between locked and unlocked positions. Indicia 208 may include symbols or other indications that signal to the user when the engagement features 204 are secured with the complementary engagement features 206. In some instances, the engagement feature 204 and complementary engagement feature 206 can be the same as, or substantially similar to, the engagement feature 196 and complementary engagement feature 198 such that the nozzle 112 is directly attachable at the end of the tube 148, i.e., without use of the extension tube 194, or multiple extension tubes 194 (or more) can be coupled together to create a very extended blower tube (i.e., to permit a user to have the end of the blower tube/nozzle near the ground while standing).

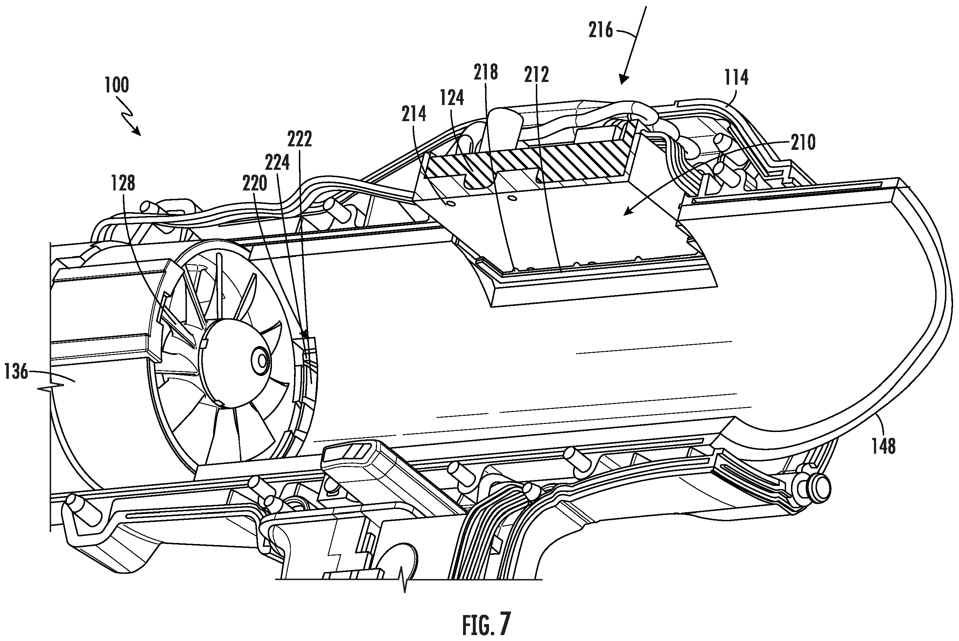

Airflow A through the blower 100 allows a user to perform an operation, such as yard maintenance by repositioning debris. Airflow A can also provide cooling to one or more internal components of the blower 100. For example, airflow A can cool the motor 126, the control circuitry 124, or both during active operation of the blower 100. In this regard, the blower 100 can be used for extended periods of time at high operating thresholds (i.e., with the motor 126 operating at or near maximum operating capacity) without overheating. Referring to FIG. 7, a partial cutaway view of the blower 100 is depicted including a cutaway of the tube 148 and a cutaway of the housing 114, 120. As depicted, the tube 148 can include an opening 210 disposed along a top side of the tube 148. In an embodiment, the opening 210 is rotationally offset from the handle 116 by approximately 180 degrees.

The opening 210 extends through a sidewall in the tube 148. The opening 210 can define a ledge 212 that extends around at least a portion of a perimeter of the opening 210 and projects into the opening 210. The ledge 212 defines a recessed support surface upon which the control circuitry 124 can rest within the opening 210. At least a portion of the ledge 212 can be recessed from an outer surface of the tube 148 such that the control circuitry 124, or a portion thereof, sits within sidewalls formed by the tube 148. The sidewalls of the tube 148 can have a close fit relationship with the control circuitry 124 and prevent the control circuitry 124 from sliding laterally.

The control circuitry 124 can be exposed through the opening 210 to airflow A driven through the tube 148. In an embodiment, the control circuitry 124 can be coupled to a heat sink 214. The heat sink 214 can rest within the opening 210 on the ledge 212 to prevent the control circuitry 124 from passing through the tube 148 into the airflow A. In an embodiment, a majority of a side of the heat sink 214 facing towards the airflow A can be directly exposed to airflow A. That is, the side of the heat sink 214 facing the airflow A can be in direct communication with the airflow A and uninterrupted by louvers, grating, mesh, webbing, wiring, or the like. For example, at least 80% of the side of the heatsink 214 can be exposed to the airflow A, such as at least 90% of the side of the heatsink 214 can be exposed to the airflow A, such as at least 98% of the side of the heatsink 214 can be exposed to the airflow A. The heat sink 214 dissipates heat from the control circuitry 124 which is absorbed into airflow A during operation of the blower 100. The greater the percentage of the heatsink 214 exposed to (in fluid communication with) the airflow A through the opening 210, the greater the cooling capacity on the control circuitry 124 and the higher the operational capability the blower 100 without overheating.

The control circuitry 124 can be installed at the opening 210 by translating the control circuitry 124 in a direction 216 towards the tube 148 when the portion of the housing 114 overlying the opening 210 is not present, e.g., during manufacturing of the blower 100. Movement in the direction 216 terminates upon the control circuitry 124 coming into contact with the ledge 212. After the control circuitry 124 is disposed on (i.e., in contact with) the ledge 212 and electrically coupled to components of the blower 100 (such as the motor 126 and the battery 140), the housing 114 is positioned over the control circuitry 124. In some instances, the housing 114 can snap into place. In other instances, the housing 114 can be retained in place by one or more of an adhesive, a threaded fastener, a non-threaded fastener, or the like. The housing 114 can apply a force on the control circuitry 124 (and more particularly on a force transfer structure of the control circuitry 124, such as the heat sink 214 which can receive the force from the housing 114 without breaking). The housing 114 can thereby compress the control circuitry 124 into contact with the ledge 212. The resulting compressive force between the housing 114 and the ledge 212 can then lock the control circuitry 124 in place without the use of fasteners.

In some instances, the ledge 212 includes a non-uniform surface. For example, the ledge 212 can include projections 218 extending from the ledge 212 in a direction opposite the direction 216. The projections 218 (or at least some of the projections 218) may together define a planar support upon which the control circuitry 124 rests when retained at the opening 210. A resulting gap formed between the ledge 212 and the control circuitry 124 may allow a portion of the airflow A driven through the tube 148 to pass through the opening 210 and interact directly with electrical components (e.g., capacitors, resistors, etc.) of the control circuitry 124 which are disposed on an upper surface of the control circuitry 124, and thus not in direct contact with the airflow A. Additionally, the projections 218 can reduce vibration to the control circuitry 124 and prevent the control circuitry 124 from sticking in the opening 210 in the instance where the control circuitry 124 is removed from the blower, e.g., for servicing or repair.

Referring still to FIG. 7, the motor 126 (FIG. 2) and fan 128 can be coupled to the blower 100 (e.g., the tube 148) via a vibrationally dampening interface. The interface can include, for example, a vibration dampening structure 220. The structure 220 can include a framework 222 formed at least in part by the tube 148. For instance, the framework 222 can include features integrally formed in the inner sidewall of the tube 148 and which project into the path of airflow A (FIG. 2). The framework 222 can be at least partially covered by a shock absorbing material 224, like rubber and other dampening materials. The stator 134 can include complementary structure that interfaces with the structure 220 to attach the motor 126 and fan 128 to the tube 148 while isolating vibration generated by operation of the motor 126 and fan 128, and mitigating the transfer of vibration from the motor 126 and fan 128 to the user, e.g., through the handle 116. As described above, the motor 126 may operate at high power outputs which causes the fan 128 to rotate at high speeds. By vibrationally isolating the motor 126 and fan 128 from (or at least reducing vibrational transfer to) other portions of the blower 100, and thus to the user, the blower 100 may be able to operate at higher loads without requiring a heavy (weighted) construction to reduce vibrational transfer.

As depicted in FIG. 7, the structure 220 may extend around only a portion of the inner circumference of the tube 148. For instance, the structure 220 may extend around less than 50% of the inner circumference of the tube 148, such as around less than 30% of the inner circumference of the tube 148, such as around less than 15% of the inner circumference of the tube 148, such as around less than 10% of the inner circumference of the tube 148. In an embodiment, the structure 220 may be split between two or more segments spaced apart from one another about the inner circumference of the tube 148. For example, the structure 220 can include a first portion as shown in FIG. 7 and a second portion disposed on an opposite side of the tube 148. A cutout, or a plurality of cutouts, can be formed in the tube liner 186 to allow the structure 220 to extend into the tube 148 to interface with the stator 136 (or another portion of the motor 126 and/or another component of the motor/fan 126, 128 assembly). In some instances, a same or similar structure to the structure 220 can be disposed upstream of the fan 128 and interface with a forward end of the motor/fan/stator 126, 128, 136. In an embodiment, the stator 136 can be disposed (sandwiched) between the structure 220 and the same or similar structure upstream of the fan 128. Alternatively, the upstream structure can be replaced with another type of attachment protocol or the stator 136 can be held in place by another type of attachment protocol, such as a fastener (e.g., a threaded or non-threaded fastener), an adhesive, a bayonet-type connection, or the like.

Additional sound dampening elements may also be included in the blower. For example, the interior surface of the tube liner 186 may be lined with a foam-type or other dampening material across all or a portion of it, including 100% of the tube liner 186 from the air outlet to the air inlet, 95% of the tube liner 186 from the air outlet to the air inlet, 90% of the tube liner 186 from the air outlet to the air inlet, 80% of the tube liner 186 from the air outlet to the air inlet, 70% of the tube liner 186 from the air outlet to the air inlet, and 50% of the tube liner 186 from the air outlet to the air inlet, or lesser or other amounts.

As described above, it is desirable to operate blowers at high operational loads to generate powerful airflow to perform a blowing operation. Moreover, prolonged use of the blower requires lightweight construction and comfortable handling. These two principles are generally exclusive to one another. For example, high operational loads generally require heavier components that require reinforced construction. In turn, heavier components and reinforced construction make the blower heavier and less easy to handle. Embodiments of blowers described herein are configured to provide high operational loads (and thus increased blowing capability) while providing lightweight, readily maneuverable construction.

In an embodiment, the blower 100 has a base weight (as measured by a weight of the base component 192 without the extension tube 194 and without the battery 140) less than 1000 grams (g), such as less than 975 g, such as less than 950 g, such as less than 925 g, such as less than 900 g while producing a maximum airflow force (i.e., a force generated with the trigger 118 in the fully actuated state) of at least 5.7 newtons (N), such as at least 5.8 N, such as at least 5.9 N, such as at least 6 N through a nozzle 112 having an area in a range of 0.002 square meters (m²) and 0.003 m². The blower 100 has an airflow rate of at least 5.88 cubic meters per minute (m³/min) (i.e., 210 cubic feet per minute) with the trigger 118 in the fully actuated state, such as an airflow rate of at least 5.9 m³/min with the trigger 118 in the fully actuated state, such as an airflow rate of at least 5.95 m³/min with the trigger 118 in the fully actuated state, such as an airflow rate of at least 6 m³/min with the trigger 118 in the fully actuated state. As a result, the blower 100 can generate a flow rate to weight efficiency, as measured by the airflow rate divided by the base weight of the blower 100, of at least 5.88 m³/(kg*min), such as at least 6 m³/(kg*min), such as at least 6.25 m³/(kg*min), such as at least 6.5 m³/(kg*min), such as at least 6.66 m³/(kg*min).

Blowers described herein can exhibit high levels of performance without requiring heavy components. Moreover, blowers described herein may operate for prolonged periods of time due to cooling structures and arrangements of electronic components and systems with respect to airflow generated by a fan of the blower. Further aspects of the invention are provided by one or more of the following embodiments:

Embodiment 1. A blower comprising: a passageway for directing airflow from an air inlet to a front end of the blower, the passageway having a variable length; a motor disposed in the passageway and operably coupled to a fan, a handle disposed below the passageway, wherein the handle comprises a trigger that receives a user input and a sensor that detects a position of the trigger; and a control circuitry in communication with the motor and the sensor, wherein the control circuitry controls a speed of the motor based on information from the sensor, wherein the length of the passageway between the air inlet and air outlet is greater than or equal to 12 inches.

Embodiment 2. The blower of any one or more of the embodiments, wherein the passageway is made up of a tube of a base component of the blower and one or more removable extension tubes detachably coupled to the base component such that the length of the passageway is variable based on a number and a type of removable extension tubes used.

Embodiment 3. The blower of any one or more of the embodiments, wherein the length of the passageway is greater than or equal to 20 inches when at least one of the one or more extension tubes is coupled to the base component of the blower.

Embodiment 4. The blower of any one or more of the embodiments, wherein the length of the tube is less than 16 inches and greater than 12 inches when none of the one or more extension tubes is coupled to the base component of the blower.

Embodiment 5. The blower of any one or more of the embodiments, wherein at least one of the one or more extension tubes has a narrowing portion at an outlet end that reduces an internal cylindrical diameter at the outlet end.

Embodiment 6. The blower of any one or more of the embodiments, wherein at least one of the one or more extension tubes does not have a narrowing portion at an outlet end such that the internal cylindrical diameter at the outlet end is approximately the same as the internal cylindrical diameter at an inlet end of the at least one of the one or more extension tubes.

Embodiment 7. The blower of any one or more of the embodiments, wherein at least one of the one or more extension tubes has a portion at an outlet end that widens in at least one radial direction.

Embodiment 8. The blower of any one or more of the embodiments, wherein at least one of the one or more extension tubes is coupled to the base component of the blower with a bayonet connection.

Embodiment 9. The blower of any one or more of the embodiments, wherein the length of the passageway between the air inlet and the front end is greater than or equal to 20 inches.

Embodiment 10. The blower of any one or more of the embodiments, wherein the length of the passageway between the air inlet and the front end is greater than or equal to 30 inches.

Embodiment 11. The blower of any one or more of the embodiments, wherein the handle extends in a direction approximately perpendicular to the passageway.

Embodiment 12. The blower of any one or more of the embodiments, where the front end of the blower is devoid of a cover including a grated surface within one inch of its outlet end.

Embodiment 13. The blower of any one or more of the embodiments, further comprising a lockout feature that prevents the trigger from being released.

Embodiment 14. The blower of any one or more of the embodiments, wherein the air inlet is oriented rearward and at least partially downward at an angle of between 20-80 degrees.

Embodiment 15. The blower of any one or more of the embodiments, wherein the blower includes a removable battery coupled to the blower below the handle.

Embodiment 16. The blower of any one or more of the embodiments, wherein the blower has a base weight of less than 900 grams (g).

Embodiment 17. The blower of any one or more of the embodiments, wherein the blower has a maximum airflow force of at least 5.7 N, as measured when the trigger is in a fully actuated state.

Embodiment 18. The blower of any one or more of the embodiments, wherein the air outlet has an area in a range of 0.002 square meters (m²) and 0.003 m².

Embodiment 19. The blower of any one or more of the embodiments, wherein the blower has an airflow flow rate of at least 210 cubic feet per meter (CFM) when the trigger is in the fully actuated state.

Embodiment 20. The blower of any one or more of the embodiments, wherein a neutral buoyancy of the blower is adjustable based on a number and a type of removable extension tubes used.

Embodiment 21. A blower comprising: a tube for directing airflow from an air inlet to a nozzle; a motor disposed in the tube and operably coupled to a fan, the fan rotatable about a longitudinal axis parallel to a direction of airflow through the tube; a handle coupled to the tube, wherein the handle comprises a trigger that receives a user input and a sensor that detects a position of the trigger; a control circuitry in communication with the motor and the sensor, wherein the control circuitry controls a speed of the motor based on information from the sensor; and a housing surrounding at least a portion of the tube and the control circuitry, wherein the housing defines a protruding portion, wherein the control circuitry is disposed in the protruding portion, wherein the control circuitry is disposed on a top side of the tube, wherein the handle is disposed on a bottom side of the tube, and wherein the handle and control circuitry are rotationally offset from one another about a central axis of the tube.

Embodiment 22. The blower of any one or more of the embodiments, wherein the tube comprises a sidewall having an opening, and wherein the control circuitry is coupled to the tube at the opening such that a portion of the control circuitry is in fluid communication with airflow driven through the tube by the fan.

Embodiment 23. The blower of any one or more of the embodiments, wherein the tube defines a ledge extending around a perimeter of the opening, and wherein at least a portion of the control circuitry is supported by the ledge.

Embodiment 24. The blower of any one or more of the embodiments, wherein the control circuitry is retained at the opening by a compressive force exerted on the control circuitry between a housing of the blower and the ledge.

Embodiment 25. The blower of any one or more of the embodiments, further comprising a sound dampening tube liner disposed along at least a portion of an internal sidewall of the tube, wherein the sound dampening tube liner defines an opening adjacent to the opening in the sidewall of the tube.

Embodiment 26. The blower of any one or more of the embodiments, wherein the handle extends in a direction generally perpendicular to the direction of airflow through the tube.

Embodiment 27. The blower of any one or more of the embodiments, wherein the protruding portion has a sloped leading end and a sloped trailing end and wherein the sloped trailing end lies along a best fit plane that intersects a best fit plane of the air inlet at an angle of approximately 90 degrees.

Embodiment 28. The blower of any one or more of the embodiments, further comprising an extension tube, wherein the tube comprises one or more engagement features configured to interface with one or more complementary engagement features associated with the extension tube to couple the extension tube to the tube, wherein the extension tube comprises one or more engagement features configured to interface with one or more complementary engagement features associated with the nozzle to couple the nozzle to the extension tube.

Embodiment 29. The blower of any one or more of the embodiments, wherein the complementary engagement features of the nozzle are compatible with the engagement features of the tube to attach the nozzle directly to the tube.

Embodiment 30. The blower of any one or more of the embodiments, wherein a length of the tube is greater than a length of the extension tube, and wherein a length of the extension tube is greater than a length of the nozzle.

Embodiment 31. The blower of any one or more of the embodiments, wherein the blower has a base weight of less than 900 grams (g) and wherein the blower has a maximum airflow force of at least 5.7 N, as measured when the trigger is in a fully actuated state.

Embodiment 32. The blower of any one or more of the embodiments, wherein the protruding portion has a sloped leading end and a sloped trailing end and a relative angle between the sloped leading end and the longitudinal direction is different than a relative angle between the sloped trailing end and the longitudinal direction.

Embodiment 33. A blower comprising: a tube for directing airflow from an air inlet to a nozzle; a motor disposed in the tube and operably coupled to a fan, the fan rotatable about a longitudinal axis parallel to a direction of airflow through the tube; a handle coupled to the tube, wherein the handle comprises a trigger that receives a user input and a sensor that detects a position of the trigger; and a control circuitry in communication with the motor and the sensor, wherein the control circuitry controls a speed of the motor based on information from the sensor, wherein the blower has a base weight of less than 900 grams (g), and wherein the blower has a maximum airflow force of at least 5.7 N, as measured when the trigger is in a fully actuated state.

Embodiment 34. The blower of any one or more of the embodiments, wherein the blower is configured to receive a removable battery.

Embodiment 35. The blower of any one or more of the embodiments, wherein the nozzle has an area in a range of 0.002 square meters (m²) and 0.003 m².

Embodiment 36. The blower of any one or more of the embodiments, wherein the air inlet is angled relative to the direction of airflow.

Embodiment 37. The blower of any one or more of the embodiments, wherein the removable battery is insertable into a receiving area in the handle, and wherein the battery comprises a base that supports the blower on a horizontal surface with the tube oriented parallel to the horizontal surface.

Embodiment 38. The blower of any one or more of the embodiments, wherein the blower has an airflow flow rate of at least 210 cubic feet per meter (CFM) when the trigger is in the fully actuated state.

Embodiment 39. The blower of any one or more of the embodiments, wherein the longitudinal direction intersects the insertion direction of the removable battery at a location within the tube and between the tube and air inlet.

Embodiment 40. The blower of any one or more of the embodiments, wherein the passageway is linear and comprises a rigid construction.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A blower comprising:
a passageway for directing airflow from an air inlet to a front end of the blower, the passageway having a variable length;
a motor disposed in the passageway and operably coupled to a fan,
a handle disposed below the passageway, wherein the handle comprises a trigger that receives a user input and a sensor that detects a position of the trigger; and
a control circuitry in communication with the motor and the sensor, wherein the control circuitry controls a speed of the motor based on information from the sensor,
wherein the length of the passageway between the air inlet and air outlet is greater than or equal to 12 inches.

2. The blower of claim 1, wherein the passageway is made up of a tube of a base component of the blower and one or more removable extension tubes detachably coupled to the base component such that the length of the passageway is variable based on a number and a type of removable extension tubes used.

3. The blower of claim 2, wherein the length of the passageway is greater than or equal to 20 inches when at least one of the one or more removable extension tubes is coupled to the base component of the blower.

4. The blower of any one of claims 2 or 3, wherein the length of the tube is less than 16 inches and greater than 12 inches when none of the one or more removable extension tubes is coupled to the base component of the blower.

5. The blower of any one of claims 2-4, wherein at least one of the one or more removable extension tubes has a portion at an outlet end that widens in at least one radial direction.

6. The blower of any one of claims 2-5, wherein at least one of the one or more removable extension tubes is coupled to the base component of the blower with a bayonet connection.

7. The blower of one of the preceding claims, wherein the handle extends in a direction approximately perpendicular to the passageway.

8. The blower of one of the preceding claims, where an air outlet of a base component of the blower is devoid of a cover including a grated surface within one inch of an outlet end.

9. The blower of one of the preceding claims, further comprising a lockout feature that prevents the trigger from being released.

10. The blower of one of the preceding claims, wherein the air inlet is oriented rearward and at least partially downward at an angle of between 20-80 degrees.

11. The blower of one of the preceding claims, wherein the blower has a base weight of less than 900 grams (g).

12. The blower of claim 11, wherein the blower has a maximum airflow force of at least 5.7 N, as measured when the trigger is in a fully actuated state.

13. The blower of claim 12, wherein the air outlet has an area in a range of 0.002 square meters (m²) and 0.003 m².

14. The blower of claim 13, wherein the blower has an airflow flow rate of at least 210 cubic feet per meter (CFM) when the trigger is in a fully actuated state.

15. The blower of any one of the preceding claims, further comprising a housing surrounding at least a portion of the passageway and the control circuitry, wherein the housing defines a protruding portion, wherein the control circuitry is disposed in the protruding portion, wherein the control circuitry is disposed on a top side of the passageway, wherein the handle is disposed on a bottom side of the passageway, and wherein the handle and control circuitry are rotationally offset from one another about a central axis of the passageway.
